# EUROPÄISCHE PATENTSCHRIFT

(11) **EP 1 131 510 B1**
(45) Veröffentlichungstag und Bekanntmachung des Hinweises auf die Patenterteilung: **30.07.2003**
(21) Anmeldenummer: 99972283.8
(22) Anmeldetag: 05.10.1999
(51) Int. Cl.: E04C 3/06, E04B 1/58

(54) **VARIABEL MONTIERBARER PROFILSTAB ZUR VERWENDUNG ALS SÄULE, AUSLEGER, TRAVERSE, STREBE ODER DERGLEICHEN FÜR VORRICHTUNGEN**
VARIABLY MOUNTABLE PROFILED BAR FOR USE AS COLUMN, BRACKET, TIE-BAR, STRUT OR THE LIKE FOR DEVICES
BARRE PROFILEE MONTABLE DE DIFFERENTES FACONS A UTILISER EN TANT QUE COLONNE, FLECHE, TRAVERSE, JAMBE DE FORCE, OU ELEMENT ANALOGUE POUR DES DISPOSITIFS

(30) Priorität: 16.11.1998 DE 19852673
(43) Veröffentlichungstag der Anmeldung: 12.09.2001
(73) Patentinhaber: ROBERT BOSCH GMBH, 70442 Stuttgart (DE)
(72) Erfinder: AUPPERLE, Bernd, 71394 Kernen (DE)
(86) Internationale Anmeldenummer: DE9903196
(87) Internationale Veröffentlichungsnummer: WO00029691

(56) Entgegenhaltungen:
- DE-A- 2 241 787
- DE-A- 4 011 252
- DE-U- 8 901 539
- DE-U- 9 203 467
- FR-A- 1 098 268
- FR-A- 1 588 281
- FR-A- 2 748 084
- BOSCH: "MECHANIK GRUNDELEMENTE" 1996 XP002094146 Seite 6 -Seite 13

## Beschreibung

### Stand der Technik

Die Erfindung betrifft einen variabel montierbaren Profilstab zur Verwendung als Säule, Ausleger, Traverse, Strebe oder dergleichen für Vorrichtungen nach dem Oberbegriff des Anspruchs 1. Solch ein Profilstab ist beispielsweise aus dem Katalog Mechanik-Grundelemente, Ausgabe 7.0, Seite 2-22 der Robert Bosch GmbH, Stuttgart, DE bekannt. Der Profilstab ist aus Aluminium und weist entlang mindestens einer Seitenfläche wenigstens eine Verankerungsnut mit einer Nutquerschnittsfläche A_{N} auf. In Längsrichtung ist mindestens ein hohler Kanal mit einer Kanalquerschnittsfläche A_{K} ausgebildet. Das Material des Profilstabs hat eine relativ geringe verbleibende Materialquerschnittsfläche A_{M}. Dadurch ist der Profilstab nicht sehr steif, wodurch er sich beispielsweise nur schlecht auf einer Fräsmaschine spannen läßt, da er sich hierbei verbiegen kann. Dies ist jedoch für genaue Bearbeitungen nachteilig. Dies wiederum führt dazu, daß der Profilstab sich nicht sehr gut für Konstruktionen verwenden läßt, die hohe Genauigkeiten erfordern. Dies ist zum Beispiel im Sondermaschinenbau wichtig.

Weiterhin sind derartige Profilstäbe aus der DE 40 11 252 A sowie dem DE 89 01 539 U bekannt.

Aus diesem Grund werden häufig Stahlrohre verwendet, die in der Regel bei gleicher Baugröße steifer sind. Diese haben jedoch den Nachteil, daß sie schwerer sind und häufig geschweißt werden müssen, was zu teuren Einzelanfertigungen führt. Sind die Oberflächen sandgestrahlt, so bleiben beim Reinigen Fasern daran hängen. Sind die Oberflächen hingegen brüniert, so rosten sie. Außerdem müssen nach der Montage häufig noch Schilder oder Installationselemente mittels Bohrungen angebracht werden, wodurch Späne in nahezu fertiggestellte Maschinen fallen. Anschraubbohrungen sind häufig nicht optimal abgedichtet, was bei Naßstationen im Betrieb dazu führen kann, daß beispielsweise Medien wie Benzin oder Diesel heruntertropfen kann.

Neben dem beschriebenen Profilstab kommen in der Praxis noch Hydraulik- oder Pneumatikzylinder mit stranggepreßten Zylindern vor. Diese dienen jedoch nicht als variabel montierbare Profilstäbe zur Verwendung als Säule, Ausleger, Traverse, Strebe oder dergleichen für Vorrichtungen.

### Vorteile der Erfindung

Der erfindungsgemäße variabel montierbare Profilstab zur Verwendung als Säule, Ausleger, Traverse, Strebe oder dergleichen für Vorrichtungen mit den kennzeichnenden Merkmalen des Anspruchs 1 hat demgegenüber den Vorteil, daß die Nachteile der aus dem Stand der Technik bekannten Profilstäbe behoben werden. Der Profilstab ist bei relativ geringer Baugröße sehr steif. Er ist sehr gerade und erlaubt somit ein genaues Ausrichten von Bauteilen zueinander.

Es ist weiterhin ein durchgängiges Ständerprogramm mit idealen Eigenschaften für den Sondermaschinenbau möglich, das über Parameter gesteuerte, variable Baugruppen ermöglicht, die allgemein nutzbar sind. Hierdurch ergibt sich eine hohe Einsparung an Konstruktionsaufwand. Es wird somit ein Baukastensystem mit miteinander kombinierbaren Teilen geschaffen. Der Profilstab ist auch im Naßbetrieb einsetzbar. Auf Tischplatten entsteht ein geringer Platzbedarf.

Aufgabe der Erfindung ist es, den bekannten Profilstab derart weiterzubilden, dass die Verbindung zweier Profilstäbe miteinander auf besonders einfache Art und Weise erfolgen kann. Diese Aufgabe wird mit dem kennzeichnenden Merkmal des Anspruchs 1 gelöst.

Vorteilhafte Weiterbildungen des erfindungsgemäßen Profilstabs sind in den Unteransprüchen angegeben.

### Zeichnung

Ein Ausführungsbeispiel der Erfindung ist in der Zeichnung dargestellt und wird im folgenden näher erläutert. Es zeigen
Figur 1 die Querschnittsfläche eines Profilstabs,
Figur 2 eine Seitenansicht des Profilstabs nach Figur 1,
Figur 3 eine Stirnfläche des Profilstabs und
Figur 4 eine Vorrichtung.

### Beschreibung des Ausführungsbeispiels

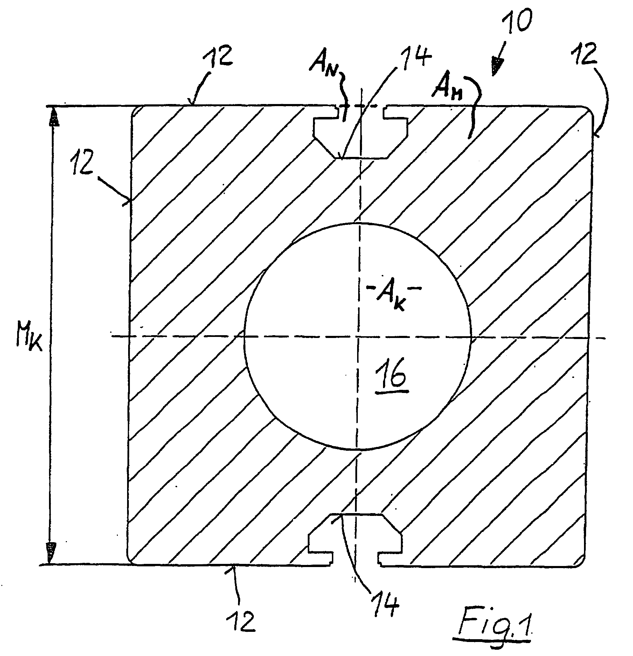

In der Figur 1 ist ein variabel montierbarer Profilstab 10 zur Verwendung als Säule, Ausleger, Traverse, Strebe oder dergleichen für Vorrichtungen in einem Schnitt quer zur Längsrichtung dargestellt. Der Profilstab 10 ist aus Aluminium und im sogenannten Strangpreßverfahren hergestellt. Die Außenkontur des Profilstabs 10 ist zweckmäßigerweise im wesentlichen rechteckig, wobei sie im vorliegenden Ausführungsbeispiel quadratisch ausgebildet ist. Ein besonders vorteilhaftes Kantenmaß M_{K} für den Profilstab 10 ist 80mm.

Entlang zweier sich gegenüberliegenden Seitenflächen 12 weist der Profilstab 10 jeweils eine an und für sich bekannte Verankerungsnut 14 auf, die in den Seitenflächen 12 mittig ausgebildet sind. Verankerungsnuten 14 bieten Halt für Nutensteine, Hammermuttern und dergleichen, um montierten Bauteilen einen festen Halt zu geben. Es können auch in mehr oder weniger als den zwei Seitenflächen 12 jeweils eine oder mehrere Verankerungsnuten 14 ausgebildet sein. Zwei sich gegenüberliegenden Verankerungsnuten 14 sind jedoch sehr zweckmäßig, da sie für die üblichen Befestigungen ausreichen. Außerdem verbleiben dadurch mehr glatte Flächen, was für den Einsatz zum Beispiel in Reinräumen erforderlich ist. Die Breite des Nuthalses beträgt 8mm, die Nuttiefe 8,85mm und die Breite des Hinterschnitts 16mm, wobei der Hinterschnitt am Nutgrund abgeschrägt ist. Durch diese vorteilhafte Nutgröße hat eine Verankerungsnut 14 eine Nutquerschnittsfläche A_{N} von ca. 112mm², wobei aber auch andere Nutquerschnittsflächen A_{N} möglich sind. An den Verankerungsnuten 14 können auf einfache Weise Bauteile wie zum Beispiel Schilder befestigt werden.

Der Profilstab 10 weist weiterhin in Längsrichtung einen zentrischen, rund ausgebildeten, hohlen Kanal 16 zum Anordnen von Versorgungsleitungen, wie zum Beispiel elektrische oder pneumatische Leitungen auf. Es können, falls erforderlich, auch mehr als ein hohler Kanal 16 vorgesehen sein. Der Kanal 16 hat zweckmäßigerweise einen Durchmesser von 40mm wodurch sich eine Kanalquerschnittsfläche A_{K} von ca. 1256mm² ergibt. Sehr zweckmäßig ist auch ein Durchmesser von 45mm. Insgesamt erwies sich ein Durchmesserbereich von 30mm bis 50mm als günstig.

Für das verbleibende Material des Profilstabs 10 ergibt sich eine Materialquerschnittsfläche A_{M} von ca. 4665mm². Wesentlich am Profilstab 10 ist, daß zumindest abschnittsweise das Verhältnis der Nutquerschnittsfläche A_{N} und der Kanalquerschnittsfläche A_{K} zur Materialquerschnittsfläche A_{M} zwischen 0,1 und 0,8 liegt. Ein besseres Verhältnis liegt zwischen 0,2 und 0,6. Als besonders vorteilhaft hat sich ein Verhältnis zwischen 0,2 bzw. 0,3, insbesondere 0,25, und 0,4 herausgestellt. Diese Angaben beziehen sich auf den rohen bzw. unbearbeiteten Profilstab 10; das heißt, wenn der Profilstab 10 hergestellt wurde. Somit hat der vorliegende Profilstab 10 als Aluminiumteil eine Biegesteifigkeit, die der eines Stahlrohres mit einem Kantenmaß von 60mm und einer Wandstärke von 5mm entspricht. Die Biegesteifigkeit des Profilstabs 10 mit dem Kantenmaß 80mm entspricht auch ca. 90% der Biegesteifigkeit eines massiven Profilstabs mit dem gleichen Kantenmaß. Durch diese Ausbildung ist der Profilstab 10 besonders variabel im Sondermaschinenbau einsetzbar und dennoch kostengünstig. Der Profilstab 10 kann auf einer Bearbeitungsmaschine eingespannt werden. Dann können in einer Einspannung genaue Bearbeitungen durchgeführt werden. Dies ist mit herkömmlichen Profilstäben aus Aluminium nicht möglich, da das Verhältnis der Flächen von hohlen Kanälen zur Fläche des Materials zu hoch ist und ein Profilstab dadurch zu weich wird.

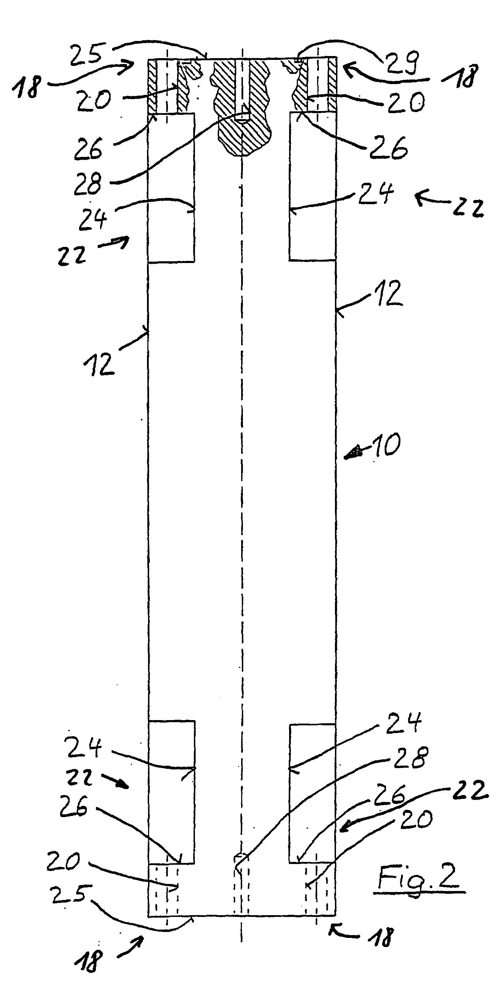

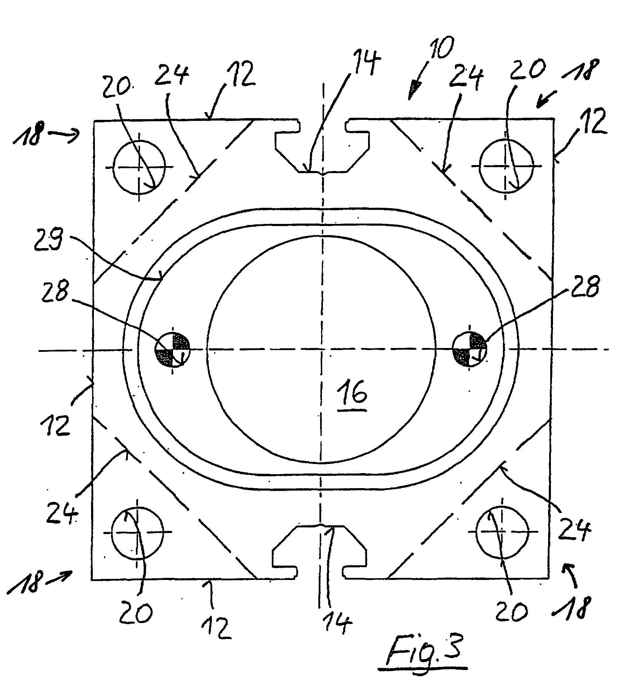

Wie sich aus den Figuren 2 und 3 ergibt, weist der Profilstab 10 in den Eckbereichen 18 Bohrungen 20 zum Anordnen von Schrauben auf, die von den Stirnflächen 25 des Profilstabs 10 ausgehen. Der Abstand der Bohrungen 20 zur Mittelachse beträgt ca. 32mm. Der Durchmesser beträgt im vorliegenden Ausführungsbeispiel 9mm, so daß Schrauben mit einem M8-Gewinde durchführbar sind.

In den Eckbereichen 18 der Endbereiche 22 des Profilstabs 10 sind Ausnehmungen 24 ausgebildet, die sich an die Bohrungen 20 anschließen und unter einem Winkel von 45° zu den Seitenflächen 12 verlaufen. Die Ausnehmungen 24 sind so ausgebildet, daß die Bohrungen 20 nicht nur von den Stirnflächen 25 zugänglich sind und daß genügend Material verbleibt, so daß an den Stirnflächen 25 des Profilstabs 10 flanschartig Bauteile anordenbar sind. Dadurch können Schrauben einfach in den Bohrungen 20 angeordnet und angezogen werden, wodurch andere Bauteile leicht und schnell befestigbar sind. An den Ausnehmungen 24 sind vorteilhafterweise Auflageflächen 26 für Schraubenköpfe vorgesehen. Es können auch noch Abdeckkappen für die Ausnehmungen 24 vorgesehen sein.

Aus der Darstellung in der Figur 3 geht weiterhin hervor, daß in den Stirnflächen 25 des Profilstabs 10 Bohrungen 28 für Stifte mit einem Durchmesser von zum Beispiel 6mm ausbildbar sind. Dadurch läßt sich der Profilstab 10 sehr genau zu anderen Bauteilen ausrichten, wodurch er gut für Präzisionsaufgaben geeignet ist. Diese Bohrungen 28 für Stifte sind nur aufgrund des günstigen Verhältnisses der Summe der Nutquerschnittsfläche A_{N} und der Kanalquerschnittsfläche A_{K} zur verbleibenden Materialquerschnittsfläche A_{M} realisierbar. Dadurch ist es auch möglich, die Bohrungen 28 aber auch die Bohrungen 20 nachzuarbeiten -zum Beispiel durch Aufbohren-, da um die Bohrungen 20, 28 genügend Material vorhanden ist. Ebenfalls aufgrund des besagten Verhältnisses ist eine Ringnut 29 für einen Dichtring in der Stirnfläche 25 ausbildbar. Dadurch läßt sich ohne zusätzliche Bauteile, wie beispielsweise einer Flanschplatte mit Dichtung, eine Dichtwirkung erzielen.

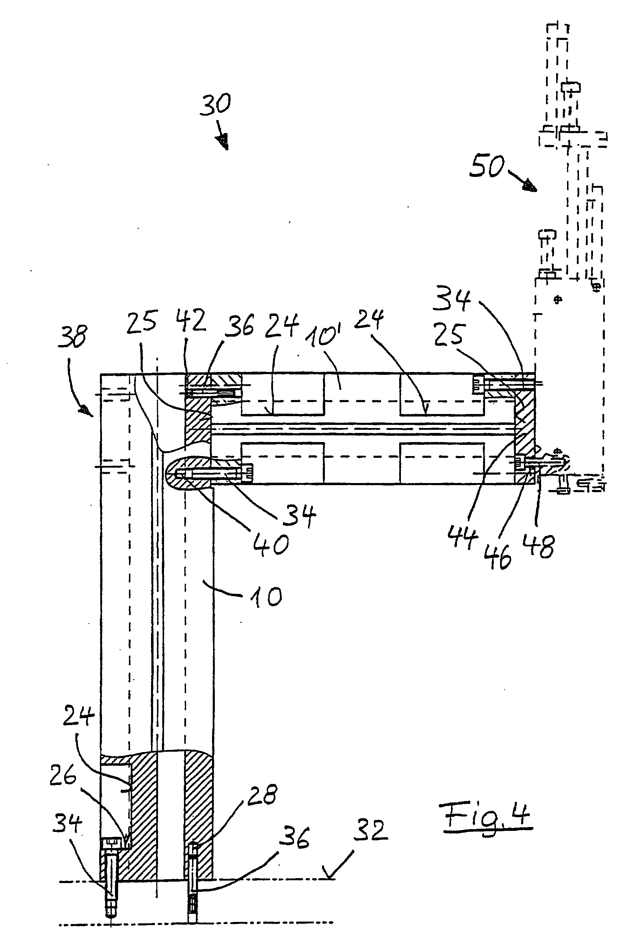

In der Figur 4 ist eine Vorrichtung 30 gezeigt, die zwei Profilstäbe 10, 10' aufweist. Der erste Profilstab 10 dient als Säule für die Vorrichtung 30 und ist auf einer Platte 32 befestigt. Die Befestigung erfolgt hierbei über vier Schrauben 32, die über die Ausnehmungen 24 durch die Bohrungen 20 geführt und in die Platte 32 geschraubt sind. Mit zwei Stiften 36, die in den Bohrungen 28 und korrespondierenden Bohrungen in der Platte 32 angeordnet sind, läßt sich die Vorrichtung 30 sehr genau auf der Platte 32 ausrichten.

An dem von der Platte 32 entfernten Ende 38 des Profilstabs 10 ist auf einer seiner Seitenflächen 12 eine Stirnfläche 25 des zweiten Profilstabs 10' angeordnet. Die Befestigung erfolgt ebenfalls über Schrauben 34 und Stifte 36, wobei die Schrauben 34 durch Ausnehmungen 24 geführt sind. Aufgrund des Verhältnisses der Nutquerschnittsfläche A_{N} und der Kanalquerschnittsfläche A_{K} zur Materialquerschnittsfläche A_{M} verbleibt ausreichend Material, so daß in diesem vollen Material Gewindebohrungen 40 für die Schrauben 32 und/oder Bohrungen 42 für die Stifte 36 quer zur Längsrichtung des Profilstabs 10 ausbildbar sind. Somit ergeben sich für die Gewindebohrungen 40 mehrere ununterbrochene Gewindegänge. Dadurch haben die Schrauben 34 einen sehr guten Halt. Die Bohrungen 42 sind durchgehend, wodurch die darin angeordneten Stifte 36 über die gesamte Länge in den Bohrungen 28 anliegen.

An der vom ersten Profilstab 10 abgewandten Stirnfläche 25 des zweiten Profilstabs 10' ist eine Flanschplatte 44 angeordnet. Sie ist mit Schrauben 34 und nicht sichtbaren Stiften 36 am zweiten Profilstab 10' wie die Platte 32 befestigt. In der Flanschplatte 44 ist mittels durch Bohrungen 46 geführte Schrauben 48 ein Linearmodul 50 befestigt. Zur Positionierung des Linearmoduls 50 sind ebenfalls nicht dargestellte Stifte 36 vorgesehen.

Durch entsprechendes Verändern der Bohrungen 46 bzw. des Bohrbildes der Flanschplatte 44 kann ein anderes Linearmodul, das nicht mit dem Linearmodul 50 identisch ist, verwendet werden. Es muß hierzu lediglich eine andere Flanschplatte verwendet werden. Die übrigen Bauteile, insbesondere die Profilstäbe 10, 10' bleiben gleich. Somit ist es möglich, durch den Profilstab 10 ein Baukastensystem zu schaffen, das besonders gut für den genaue Bearbeitungen erfordernden Sondermaschinenbau geeignet ist.

Neben der detailliert beschriebenen Verwendung als Säule und Ausleger kann der Profilstab 10 auch als Traverse oder Strebe zwischen zwei Bauteilen einer abgewandelten Vorrichtung 30 verwendet werden; bspw. können hierfür an beiden Stirnflächen 25 des Profilstabs 10' Profilstäbe 10 befestigt werden. Der Profilstab 10, 10' ist also sehr variabel einsetzbar, da an seinen Stirnflächen 25 und an seinen Seitenflächen 12 über Bohrungen 20 bzw. 40 sowie an seinen Verankerungsnuten 14 irgendwelche Bauteile stabil befestigbar sind.

## Patentansprüche

1. Variabel montierbarer Profilstab (10, 10') zur Verwendung als Säule, Ausleger, Traverse, Strebe oder dergleichen für Vorrichtungen (30), insbesondere aus Aluminium, der entlang mindestens einer Seitenfläche (12) wenigstens eine Verankerungsnut (14) mit einer Nutquerschnittsfläche A_{N}, der in Längsrichtung des Profilstabs (10, 10') mindestens einen hohlen Kanal (16) mit einer Kanalquerschnittsfläche A_{K} und dessen Material eine Materialquerschnittsfläche A_{M} aufweist, wobei zumindest abschnittsweise das Verhältnis der Nutquerschnittsfläche A_{N} und der Kanalquerschnittsfläche A_{K} zusammen zur Materialquerschnittsfläche A_{M} zwischen 0,1 und 0,8 liegt, **dadurch gekennzeichnet, dass** der Profilstab (10, 10') in Eckbereichen wenigstens eines Endbereichs (22) je eine Bohrung (20) zum Anordnen von Schrauben (34) aufweist, die von der Stirnfläche (25) des Profilstabs (10, 10') ausgehen, dass in den Eckbereichen (18) des wenigstens einen Endbereichs (22) des Profilstabs (10, 10') Ausnehmungen (24) so ausgebildet sind, dass die Ausnehmungen (24) sich an die von den Stirnflächen (25) ausgehenden Bohrungen (20) anschließen, dass die Bohrungen (20) in den Eckbereichen (18) zugänglich sind, dass an den Ausnehmungen (24) Auflageflächen (26) für Schraubenköpfe ausgebildet sind und dass an den Stirnflächen (25) Material verbleibt.

2. Profilstab nach Anspruch 1, **dadurch gekennzeichnet, dass** in wenigstens einer Stirnfläche (25) des Profilstabs (10,10') eine Ringnut (29) für einen Dichtring ausgebildet ist.

3. Profilstab nach Anspruch 1 oder 2, **dadurch gekennzeichnet, dass** das Verhältnis der Nutquerschnittsfläche A_{N} und der Kanalquerschnittsfläche A_{K} zusammen zur Materialquerschnittsfläche A_{M} zwischen 0,2 und 0,6 liegt.

4. Profilstab nach einem der Ansprüche 1 bis 3, **dadurch gekennzeichnet, dass** der Profilstab (10, 10') eine im wesentlichen rechteckige, vorzugsweise quadratische Außenkontur hat.

5. Profilstab nach einem der Ansprüche 1 bis 4, **dadurch gekennzeichnet, dass** der Profilstab (10, 10') zwei sich gegenüberliegende Verankerungsnuten (14) aufweist.

6. Profilstab nach einem der Ansprüche 1 bis 5, **dadurch gekennzeichnet, dass** in den Stirnflächen (25) des Profilstabs (10, 10') Bohrungen (28) für Stifte (36) ausgebildet sind.

7. Profilstab nach einem der Ansprüche 1 bis 6, **dadurch gekennzeichnet, dass** an den Stirnflächen (25) des Profilstabs (10, 10') Bauteile (10, 10', 32, 44, 50) anordenbar sind.

## Claims

1. Profiled bar (10, 10') which can be fitted in a variable manner for use as a column, extension arm, crosspiece, strut or the like for devices (30), in particular made of aluminium, which, along at least one side surface (12), has at least one anchoring slot (14) with a slot cross-sectional area A_{N}, and which, in the longitudinal direction of the profiled bar (10, 10'), has at least one hollow passage (16) with a passage cross-sectional area A_{K}, and the material of which has a material cross-sectional area A_{M}, the ratio of the slot cross-sectional area A_{N} and the passage cross-sectional area A_{K} together to the material cross-sectional area A_{M} being between 0.1 and 0.8 at least in sections, **characterized in that** the profiled bar (10, 10'), in corner regions of at least one end region (22), has one hole (20) each for arranging screws (34), these holes (20) starting from the end face (25) of the profiled bar (10, 10'), **in that** recesses (24) are formed in the corner regions (18) of the at least one end region (22) of the profiled bar (10, 10') in such a way that the recesses (24) adjoin the holes (20) starting from the end faces (25), **in that** the holes (20) in the corner regions (18) are accessible, **in that** bearing surfaces (26) for screw heads are formed on the recesses (24), and **in that** material remains at the end faces (25).

2. Profiled bar according to Claim 1, **characterized in that** an annular groove (29) for a sealing ring is formed in at least one end face (25) of the profiled bar (10, 10').

3. Profiled bar according to Claim 1 or 2, **characterized in that** the ratio of the slot cross-sectional area A_{N} and the passage cross-sectional area A_{K} together to the material cross-sectional area A_{M} is between 0.2 and 0.6.

4. Profiled bar according to one of Claims 1 to 3, **characterized in that** the profiled bar (10, 10') has an essentially rectangular, preferably square, outer contour.

5. Profiled bar according to one of Claims 1 to 4, **characterized in that** the profiled bar (10, 10') has two anchoring slots (14) opposite one another.

6. Profiled bar according to one of Claims 1 to 5, **characterized in that** holes (28) for pins (36) are formed in the end faces (25) of the profiled bar (10, 10').

7. Profiled bar according to one of Claims 1 to 6, **characterized in that** components (10, 10', 32, 44, 50) can be arranged on the end faces (25) of the profiled bar (10, 10').

## Revendications

1. Barre profilée (10, 10') de montage polyvalent applicable comme colonne, bras, traverse, entretoise ou analogues pour des dispositifs (30) notamment en aluminium, ayant le long d'au moins une surface latérale (12) au moins une rainure d'accrochage (14) ayant une surface de section de rainure A_{N}, au moins un canal creux (16) dans la direction longitudinale de la barre profilée (10, 10') avec une surface de section de canal A_{K} et dont la matière présente une surface de section de matière A_{M},
au moins par segment, le rapport de la surface de section de rainure A_{N} et de la surface de section de canal A_{K} additionné, par rapport à la surface de la section de matière A_{M} se situant entre 0,1 et 0.8,
**caractérisée en ce que**
la barre profilée (10, 10') présente dans les zones de coin d'au moins une extrémité (22) chaque fois un perçage (20) pour recevoir des vis (34) partant de la surface frontale (25) de la barre profilée (10, 10'),
dans les zones de coin (18) d'au moins une extrémité (22) de la barre profilée (10, 10') on a des cavités (24) réalisées pour qu'elles fassent suite aux perçages (20) partant des surfaces frontales (25),
les perçages (20) sont accessibles dans les zones d'extrémités (18),
les cavités (24) comportent des surfaces d'appui (26) pour les têtes de vis, et de la matière subsiste au niveau des surfaces frontales (25).

2. Barre profilée selon la revendication 1,
**caractérisée en ce que**
dans au moins une surface frontale (25) de la barre profilée (10, 10') on a une rainure annulaire (29) pour un joint d'étanchéité.

3. Barre profilée selon l'une quelconque des revendications 1 ou 2,
**caractérisée en ce que**
le rapport de la surface de section de rainure A_{N} et de la surface de section de canal A_{K} en combinaison et de la surface de section de matière A_{M} est compris entre 0.2 et 0.6.

4. Barre profilée selon l'une quelconque des revendications 1 à 3,
**caractérisée en ce que**
la barre profilée (10, 10') présente un contour extérieur essentiellement rectangulaire et notamment carré.

5. Barre profilée selon l'une quelconque des revendications 1 à 4,
**caractérisée en ce que**
la barre profilée (10, 10') comporte deux rainures d'accrochage (14) opposées.

6. Barre profilée selon l'une quelconque des revendications 1 à 5,
**caractérisée en ce que**
les surfaces frontales (25) de la barre profilée (10, 10') comportent des perçages (28) pour des broches (36).

7. Barre profilée selon l'une quelconque des revendications 1 à 6,
**caractérisée en ce que**
des composants (10, 10'; 32, 44, 50) sont installés pour des faces frontales (25) de la barre profilée (10, 10').
